# EUROPÄISCHE PATENTSCHRIFT

(11) **EP 2 019 475 B1**
(45) Veröffentlichungstag und Bekanntmachung des Hinweises auf die Patenterteilung: **05.11.2014**
(21) Anmeldenummer: 08104149.3
(22) Anmeldetag: 29.05.2008
(51) Int. Cl.: H02K 5/08, H02K 7/116, H02K 1/17, H02K 1/18

(54) **Elektrische Antriebseinheit**
Electric drive unit
Unité d'entraînement électrique

(30) Priorität: 26.07.2007 DE 102007035092
(43) Veröffentlichungstag der Anmeldung: 28.01.2009
(73) Patentinhaber: ROBERT BOSCH GMBH, 70442 Stuttgart (DE)
(72) Erfinder: Huck, Thomas, 77836 Rheinmuenster (DE); Mili, Tarek, 76133 Karlsruhe (DE); Krauth, Marco, 76547 Sinzheim (DE); Anding, Lars-Dirk, 72202 Nagold (DE)

(56) Entgegenhaltungen:
- DE-A1-102005 028 815
- GB-A- 2 014 371
- US-A- 4 471 251

## Beschreibung

### Stand der Technik

Die Erfindung betrifft eine elektrische Antriebseinheit nach dem Oberbegriff des Anspruchs 1.

Eine derartige Antriebseinheit ist aus der der GB 2 014 371 A bekannt. Die bekannte Antriebseinheit umfasst eine Gehäuseschale, in der Bestandteile eines Antriebsmotors mit einer Ankerwelle angeordnet sind. Die Gehäuseschale ist von einem Gehäusedeckel verschlossen, der als magnetische Rückschlusselemente für den Antriebsmotor dienende Abschnitte aufweist. Diese Abschnitte sind durch einen Stanz-/Biegeprozess aus dem Gehäuseboden ausgebildet, und ragen in die Gehäuseschale hinein. Aufgrund der Rückschlusselemente aus Teilbereichen des Gehäusebodens ist der Gehäuseboden mit Aussparungen versehen, die den Eintritt von Feuchtigkeit oder Schmutz in das Gehäuseinnere ermöglichen. Daher ist es bei der bekannten elektrischen Antriebseinheit vorgesehen, dass der Gehäuseboden auf der dem Gehäusedeckel abgewandten Seite von einem zusätzlichen Abdeckelement überdeckt ist, um insbesondere den Bereich der Rückschlusselemente abzudecken bzw. zu verschließen.

Aus der US 4,471,251 ist darüber hinaus der Einsatz einer elektrischen Antriebseinheit als Fensterheberantrieb bekannt, wobei die elektrische Antriebseinheit zwei Gehäuseschalen aufweist, von denen die eine Gehäuseschale mit der Tür verbunden und dadurch gehaltert ist.

Aus der DE 10 2005 028 815 A1 der Anmelderin ist darüber hinaus eine elektrische Antriebseinheit bekannt, die eine Gehäuseschale zur Aufnahme eines Antriebsmotors und eines Getriebes aufweist, die von einem Deckel verschlossen ist. Auch diese elektrische Antriebseinheit ist insbesondere als Fensterheberantrieb ausgebildet.

Aus der DE 103 34 611 A1 ist eine weitere elektrische Antriebseinheit bekannt. Bei dieser Antriebseinheit sind die Lager der Ankerwelle in entsprechenden Aufnahmen der Gehäuseschale platziert und werden nach dem Verschließen der Gehäuseschale mittels eines Deckels durch am Deckel vorgesehene Lagerniederhalter fixiert. Diese bekannte Konstruktion erfordert es, dass sowohl der Deckel, als auch die Verbindungen zwischen dem Deckel und der Gehäuseschale sehr geringe Fertigungstoleranzen aufweisen. Zudem muss der Deckel eine ausreichende Festigkeit und Steifigkeit aufweisen, damit er die Lagerkräfte über die entsprechenden Verbindungselemente mit der Gehäuseschale gegen die Gehäuseschale abstützen kann.

Aus der DE 10 2005 047 445 A1 ist ein Elektromotor mit einem geteilten magnetischen Rückschlusselement bekannt. Dieser bekannte Elektromotor ist in einem Gehäuse angeordnet und besitzt ein oberes magnetisches Rückschlusselement, welches seitliche Befestigungslaschen aufweist, mittels derer das obere Rückschlusselement mit dem Gehäuse verschraubt ist.

### Offenbarung der Erfindung

Ausgehend von dem dargestellten Stand der Technik liegt der Erfindung die Aufgabe zugrunde, eine elektrische Antriebseinheit nach dem Oberbegriff des Anspruchs 1 derart weiterzubilden, dass eine vereinfachte Fertigung und Montage erzielbar ist. Diese Aufgabe wird mit den kennzeichnenden Merkmalen des Anspruchs 1 gelöst. Durch das Vorsehen der Niederhalteabschnitte für die Lager der Ankerwelle übernimmt der obere Teil des Rückschlusselements nicht nur die Aufgabe der Befestigung des Elektromotors bezüglich der Gehäuseschale, sondern außerdem die Aufgabe der Fixierung der Ankerwelle bezüglich der Gehäuseschale. Durch die erfindungsgemäße Ausgestaltung der elektrischen Antriebseinheit werden die Lagerkräfte der Ankerwelle über das Rückschlusselement auf die Gehäuseschale übertragen. Dadurch ist die elektrische Antriebseinheit selbst dann, wenn sie nicht mit einem die Gehäuseschale verschließenden Deckel versehen ist, ein in sich geschlossenes, voll funktionsfähiges Bauteil. Der obere Teil des Rückschlusselements weist zwei Niederhalteabschnitte auf, die die Ankerwelle zur drehbaren Lagerung an der Gehäuseschale an zwei unterschiedlichen Orten haltern. Durch diese Ausgestaltungsform wird die eigenständige Funktionstüchtigkeit der erfindungsgemäßen elektrischen Antriebseinheit verbessert. Weiterhin ist es erfindungsgemäß ein Gehäusedeckel vorgesehen, der zum Verschließen der Gehäuseschale mit dieser verbindbar, vorzugsweise verrastbar, ist. Durch diese Ausführungsform ist das Innere der elektrischen Antriebseinheit vor äußeren Einflüssen, wie beispielsweise Feuchtigkeit oder Staub, geschützt. Zudem dämpft der Deckel die vom Elektromotor und vom Getriebe im Betrieb erzeugten Geräusche.

Vorteilhafte Weiterbildungen der erfindungsgemäßen elektrischen Antriebseinheit sind in den Unteransprüchen aufgeführt.

Aufgrund der erfindungsgemäßen Ausgestaltung der Antriebseinheit werden an diesen Deckel nur verhältnismäßig geringe Anforderungen bezüglich dessen Steifigkeit und Festigkeit zu stellen sein, da dieser Deckel nur die Funktion des Verschließens der Gehäuseschale erfüllen muss und keine oder höchstens geringe vom Antrieb herrührenden Kräfte bezüglich der Gehäuseschale abstützen muss.

In einer besonders bevorzugten Ausgestaltungsform bildet die Antriebseinheit einen Antrieb eines Fensterhebers in einem Kraftfahrzeug und der Gehäusedeckel ist von einem Abschnitt der Fahrzeugkarosserie oder eines Karosserieeinsatzes gebildet. Hierdurch übernimmt die Fahrzeugkarosserie oder der Karosserieeinsatz, vorzugsweise ein Türmodul aus Kunststoff oder Metall, zusätzlich die Funktion des Gehäusedeckels für die elektrische Antriebseinheit. Dadurch lässt sich die Gesamtteilezahl bei der Herstellung einer Kraftfahrzeugtür reduzieren und es ergeben sich neue Befestigungsmöglichkeiten für die elektrische Antriebseinheit an der Kraftfahrzeugtür. Anstatt die Antriebseinheit, wie bisher üblich, an der Tür zu verschrauben, kann die erfindungsgemäße Antriebseinheit an der Karosserie oder dem Karosserieeinsatz, beispielsweise einem Türmodul, verrastet, vernietet oder verschweißt werden.

Die erfindungsgemäße elektrische Antriebseinheit erlaubt aufgrund ihrer vollfunktionsfähigen Anordnung mit nur einer Gehäusehälfte, nämlich der Gehäuseschale, die Integration in größerflächige Teile des Fensterheber- oder Türsystems, wobei dann der Deckel für die Antriebseinheit von diesen Teilen gebildet wird. Dadurch ergibt sich die Möglichkeit der Teilereduzierung und auch der Schnittstellenreduzierung, sodass die Fertigungsprozesse beispielsweise bei der Kraftfahrzeugherstellung mit weniger Fertigungsschritten auskommen. Dadurch, dass der Deckel nicht oder nur zu einem sehr geringen Teil in den Kraftfluss zur Abstützung der Lagerkräfte der Ankerwelle eingebunden ist, kann der Deckel einfacher und kostengünstiger gestaltet werden, da dessen Konturen vereinfacht werden können und weniger enge Toleranzen eingehalten werden müssen. Außerdem können andere Werkstoffe als im Stand der Technik, zum Beispiel kostengünstigere Kunststoffe, für einen Deckel ausgewählt werden.

Durch den unmittelbaren Kontakt zwischen den Lagern der Ankerwelle und dem aus Metall bestehenden oberen Teil des magnetischen Rückschlusselements kann die in den Lagern entstehende Wärme besser abgeführt werden, als dies beim Stand der Technik der Fall ist, wo die Lager von einem Kunststoffdeckel fixiert werden. Der obere Teil des magnetischen Rückschlusselements wirkt dabei als Kühlkörper für die Lager. Zudem ist die Schallabstrahlung bei der erfindungsgemäßen elektrischen Antriebseinheit geringer als im Stand der Technik, da keine unmittelbare körperliche Verbindung zwischen den Lagern der Antriebswelle und dem Deckel besteht und so der Deckel von den Lagern der Ankerwelle nicht so stark zum Schwingen angeregt wird, wie dies im Stand der Technik der Fall ist.

### Ausführungsbeispiel

### Zeichnungen

In der Zeichnung sind verschiedene Ausführungsbeispiele einer erfindungsgemäßen Vorrichtung dargestellt und in der nachfolgenden Beschreibung näher erläutert.

Es zeigen:
- Fig. 1: eine Draufsicht auf eine erfindungsgemäße Antriebseinheit,
- Fig. 2: eine teilweise geschnittene Perspektivansicht einer erfindungsgemäßen elektrischen Antriebseinheit mit einem Deckel,
- Fig. 3: eine mit einem Türmodul einer Kraftfahrzeugtür verbundene erfindungsgemäße elektrische Antriebseinheit und
- Fig. 4: einen Querschnitt durch die mit dem Türmodul verbundene elektrische Antriebseinheit entlang der Linie IV-IV in Fig. 3.

### Beschreibung der Ausführungsbeispiele

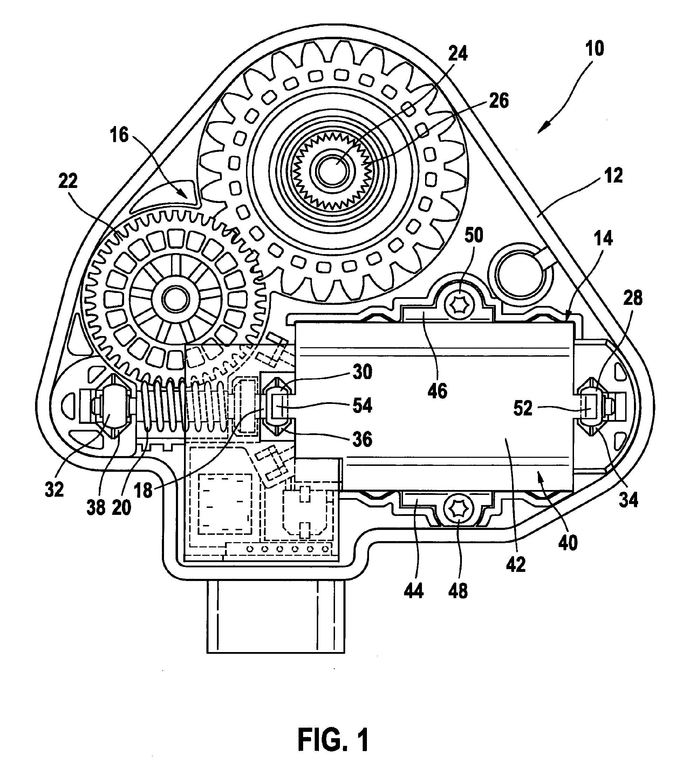

In Fig. 1 ist eine elektrische Antriebseinheit 10 mit einer Gehäuseschale 12 gezeigt, in welcher die Antriebselemente der Antriebseinheit 10 aufgenommen sind. Diese Antriebselemente umfassen einen Antriebsmotor 14 und ein Getriebe 16.

Der Antriebsmotor 14 weist eine Ankerwelle 18 mit einem (nicht gezeigten) Anker und einer Schnecke 20 auf, die mit einem Schneckenrad 22 des Getriebes 16 zusammenwirkt. Das Schneckenrad 22 überträgt sein Drehmoment über (nicht gezeigte) weitere Getriebeelemente auf eine Abtriebswelle 24, auf der ein Abtriebselement 26 vorgesehen ist. Das Schneckenrad 22, die Abtriebswelle 24 sowie die weiteren (nicht gezeigten) rotierenden Getriebeelemente sind in der Gehäuseschale 12 drehbar gelagert.

Die Ankerwelle 18 ist über drei Lager 28, 30, 32 in der Gehäuseschale 12 drehbar gelagert. Dazu sind die Lager 28, 30, 32 in Lageraufnahmen eingesetzt, die in der Gehäuseschale 12 passend ausgeformt sind. Diese Lageraufnahmen 34, 36, 38 ermöglichen ein Einsetzen der mit den Lagern 28, 30, 32 versehenen Ankerwelle 18 in die Gehäuseschale 12 und sind dazu im Querschnitt U-förmig ausgestaltet, sodass ein Einsetzen von der offenen Seite des U möglich ist.

Das erste Lager 28 ist auf der von der Schnecke abgewandten Seite des elektrischen Antriebsteils 40 des Elektromotors 14 gelegen und lagert dort das erste Ende der Ankerwelle 18. Das zweite Lager 30 ist auf der anderen Seite des elektrischen Antriebsteils 40 des Elektromotors 14 gelegen und lagert die Ankerwelle 18 in deren mittlerem Abschnitt. Das dritte Lager 32 ist im Bereich des zweiten Endes der Ankerwelle 18 gelegen, wobei sich die Schnecke 20 zwischen dem zweiten Lager 30 und dem dritten Lager 32 befindet.

Der elektrische Antriebsteil 40 des Elektromotors 14 ist mit einem geteilten Rückschlusselement versehen, dessen unterer (nicht gezeigter) Teil in der Gehäuseschale 12 liegt und dessen oberer Teil 42 den elektrischen Antriebsteil 40 des Elektromotors 14 auf dessen aus der Gehäuseschale 12 heraus weisenden Seite abdeckt. Der obere Teil 42 des Rückschlusselements ist mit zwei seitlichen Befestigungslaschen 44, 46 versehen, die sich im wesentlichen parallel zur Achse der Ankerwelle 18 erstrecken. Diese Befestigungslaschen 44, 46 weisen jeweils eine Bohrung auf, durch welche jeweils eine Befestigungsschraube 48, 50 hindurchgeführt und in die Gehäuseschale 12 eingeschraubt ist. Auf diese Weise wird der elektrische Antriebsteil in der Gehäuseschale 12 fixiert.

An der vorderen und hinteren Stirnseite des oberen Teils 42 des Rückschlusselements sind ein erster Niederhalteabschnitt 52 beziehungsweise ein zweiter Niederhalteabschnitt 54 vorgesehen. Der erste Niederhalteabschnitt 52 greift dabei zwischen die freien Schenkel der U-förmigen ersten Lageraufnahme 34 ein und kommt auf dem ersten Lager 28 der Ankerwelle 18 zur Anlage, sodass der erste Niederhalteabschnitt 52 das erste Lager 28 in der ersten Lageraufnahme 34 fixiert.

Der zweite Niederhalteabschnitt 54 greift zwischen die freien Schenkel der U-förmigen zweiten Lageraufnahme 36 ein und kommt auf dem zweiten Lager 30 zur Anlage, sodass der zweite Niederhalteabschnitt 54 das zweite Lager 30 der Ankerwelle 18 in der zweiten Lageraufnahme 36 fixiert. Auf diese Weise ist die Ankerwelle 18 zuverlässig in der Gehäuseschale 12 drehbar gelagert. Da der obere Teil (42) des Rückschlusselements kraftschlüssig über die beiden Befestigungsschrauben an der Gehäuseschale 12 befestigt ist, wird ein geschlossener Kraftfluss zwischen Lager, Gehäuseschale, Befestigungsschrauben und oberem Teil des Rückschlusselements erreicht. Die von der Ankerwelle 18 ausgehenden Querkräfte werden somit von der Gehäuseschale 12 über die Befestigungsschrauben 48, 50 und den oberen Teil 42 des magnetischen Rückschlusselements des elektrischen Antriebsteils 40 des Elektromotors 14 abgestützt.

Das in Fig. 1 gezeigte elektrische Antriebselement 10 stellt in der in Fig. 1 dargestellten offenen Bauweise ein voll funktionsfähiges, eigenständiges Bauteil dar.

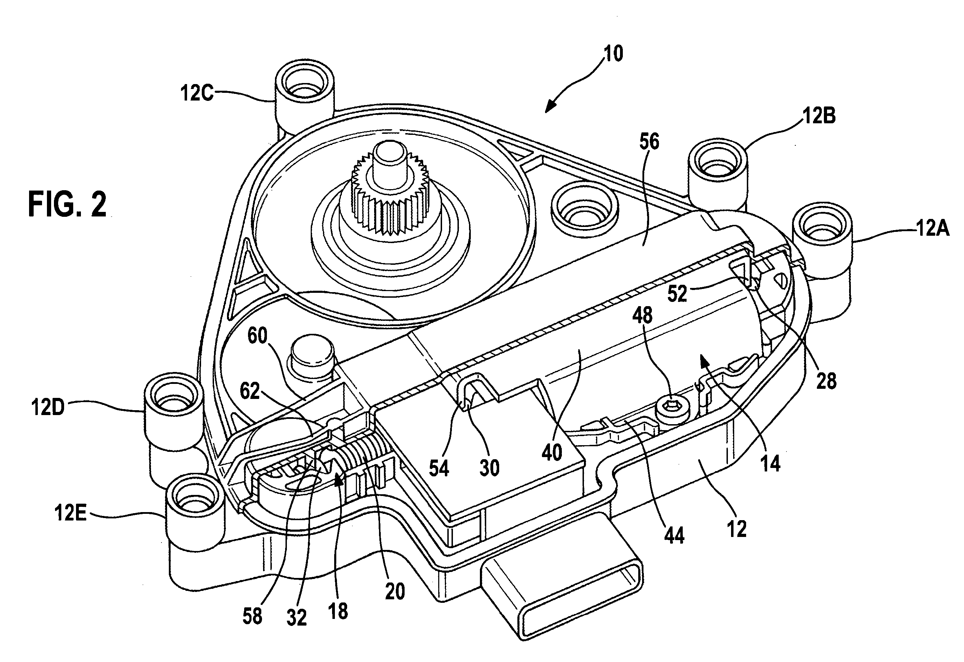

Fig. 2 zeigt eine elektrische Antriebseinheit 10, wie sie in Verbindung mit der Fig. 1 beschrieben worden ist, in perspektivischer Darstellung. Die Gehäuseschale 12 ist an ihrem Außenumfang mit Anschraubdomen 12A, 12B, 12C, 12D, 12E versehen, mittels derer die elektrische Antriebseinheit an der Struktur eines anzutreibenden Elements anbringbar ist. Des weiteren ist in der Fig. 2 ein Deckel 56 vorgesehen, der die Gehäuseschale 12 verschließt und der in Fig. 2 entlang der Schnittlinie 56' geschnitten dargestellt ist.

In der perspektivischen Darstellung der Fig. 2 sind die Niederhalteabschnitte 52, 54 des oberen Teil 42 des magnetischen Rückschlusselements des elektrischen Antriebsteils 40 des Antriebsmotors 14 gezeigt, die das erste und zweite Lager 28, 30 der Ankerwelle 18 gegenüber der Gehäuseschale 12 fixieren. Das dritte Lager 32 der Ankerwelle 18 wird durch einen am Deckel 56 ausgebildeten dritten Niederhalteabschnitt 58 in der Gehäuseschale 12 fixiert. Da die Ankerwelle 18 durch die Niederhalteabschnitte 52, 54 am oberen Teil 42 des magnetischen Rückschlusselements im wesentlichen bereits in der Gehäuseschale 12 gehaltert ist, müssen über den am Deckel 56 vorgesehenen dritten Niederhalteabschnitt 58 nur noch geringe Kräfte über den Deckel 56 an der Gehäuseschale 12 abgestützt werden, sodass der Deckel 56 keine großen Kräfte auf die Gehäuseschale 12 übertragen muss. Es reicht daher aus, wenn der Deckel beispielsweise über Schnapp-Rast-Verbindungen oder Clips-Verbindungen an der Gehäuseschale 12 befestigt wird. Da das dritte Lager 32 der Ankerwelle 18 in der Nähe des Randes der Gehäuseschale 12 und in einem Eckbereich davon gelegen ist, müssen die Abstützkräfte des dritten Lagers 32 der Ankerwelle 18 lediglich über eine geringe Entfernung vom dritten Niederhalteabschnitt 58 zum mit der Gehäuseschale verbundenen Rand des Deckels 56 geleitet werden, sodass nur dieser Bereich des Deckels mit Verstärkungen, wie beispielsweise den Rippen 60, 62, versehen zu sein braucht.

Ein weiterer Vorteil ist, dass die Temperatur der Lager besser durch den Kontakt mit dem aus Metall (zum Beispiel Stahl) bestehenden oberen Teil 42 des Rückschlusselements abgeführt wird, als dies durch die Befestigung über einen Deckel mit Niederhaltern aus Kunststoff der Fall wäre. Hinsichtlich der Geräuschentwicklung bewirken die erfindungsgemäßen Lagerniederhalter ebenfalls einen positiven Effekt, da die Anregung des Deckels durch den Anker über die Lagerung weitgehend vermieden wird.

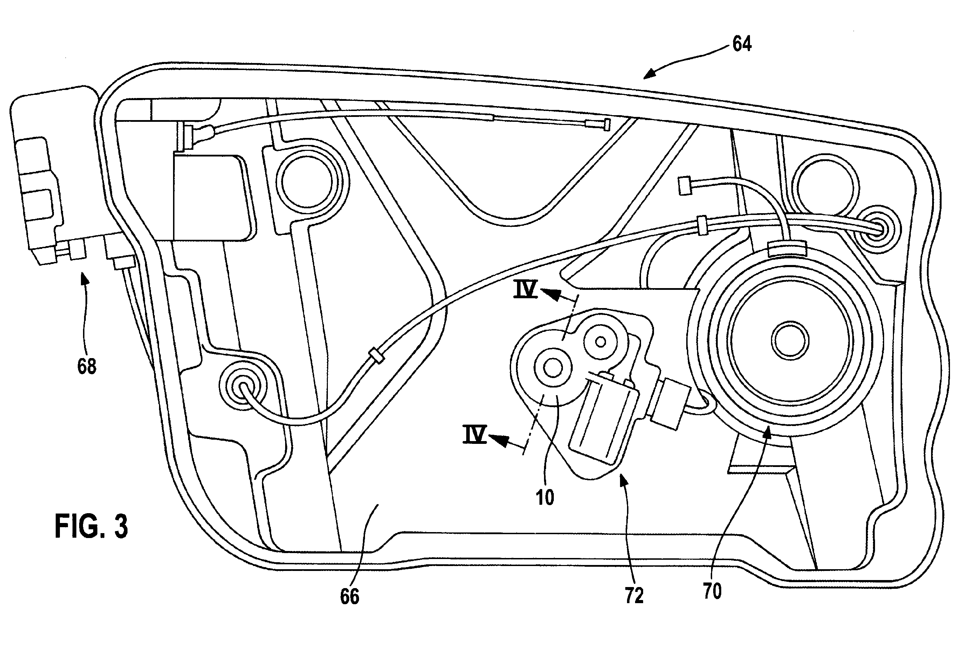

Fig. 3 zeigt einen Moduleinsatz 64 für eine (nicht gezeigte) Fahrzeugtür mit einem flächigen Formteil 66, welches in die Fahrzeugtür eingesetzt, beispielsweise eingeschraubt, wird. Der Moduleinsatz 64 ist beispielsweise mit einer Schließeinheit 68 und einem Lautsprecher 70 bereits vormontiert.

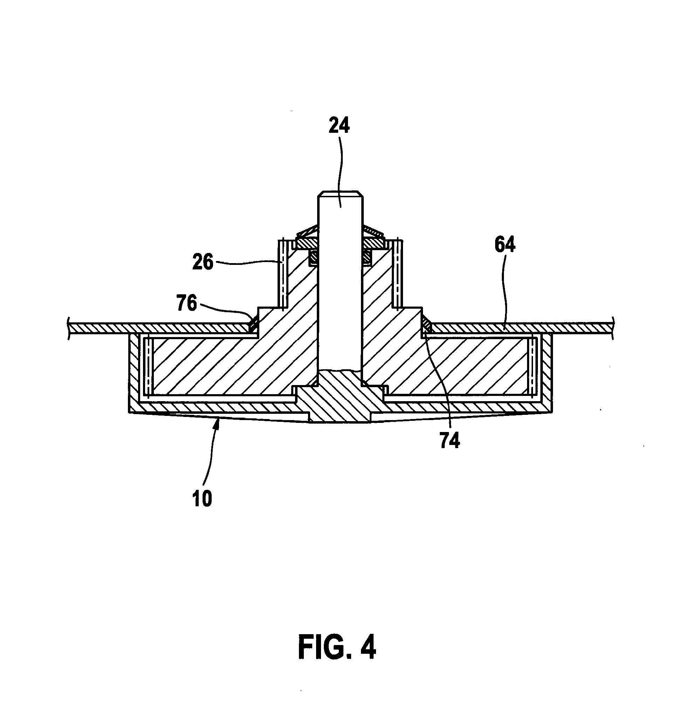

Mit dem Moduleinsatz 64 verbunden ist auch die elektrische Antriebseinheit 10 für einen in der Fahrzeugtür vorgesehenen (nicht gezeigten) Fensterheber. Die elektrische Antriebseinheit 10 ist dabei in der in Fig. 1 gezeigten offenen Variante ohne eigenständigen Deckel verbaut, wobei der Moduleinsatz 64 in dem Bereich 72, in welchem die elektrische Antriebseinheit montiert ist, so ausgestaltet ist, dass er einen Deckel für die Gehäuseschale 12 bildet und insbesondere diese nach außen hin gegen das Eindringen von Feuchtigkeit und Staub abdichtet. Dazu ist einerseits eine Dichtung entlang des Umfangsrandes der Gehäuseschale 12 vorgesehen und andererseits ist der Umfang einer Öffnung 74, die im Moduleinsatz 64 vorgesehen ist, mit einer Dichtung 76 versehen. Durch die Öffnung 74 ist der mit dem Abtriebselement 26 versehene Teil der Abtriebswelle 24 abdichtend hindurchgeführt, wie in Fig. 4 gezeigt ist, sodass das Abtriebselement 26 mit entsprechenden Antriebselementen des Fensterhebers nach Montage des Moduleinsatzes 64 in der Fahrzeugtür in Wirkungseingriff geraten kann.

Es sei angemerkt, dass hinsichtlich der in allen Figuren gezeigten Ausführungsbeispiele im Rahmen des durch die Patentansprüche definierten Schutzbereiches vielfältige Abwandlungen möglich sind. So kann die konkrete Ausgestaltung der Kontur der Gehäuseschale auch von einer dreieckförmigen Grundfläche abweichen und beispielsweise oval oder viereckig ausgebildet sein. Insbesondere können vielfältige Möglichkeiten zur Befestigung der elektrischen Antriebseinheit 10 mit einem Deckel oder einem die Deckelfunktion ausübenden anderen Bauteil vorgesehen sein, wie beispielsweise Verrasten, Verschrauben, Vernieten oder Verschweißen, da der Deckel keine wesentliche Funktion bei der Abstützung von Lagerkräften der Ankerwelle 18 mehr ausübt. Der Deckel oder das als Deckel wirkende Bauteil kann somit auch eine einfache Kontur mit toleranzunempfindlicher Gestaltung aufweisen und beispielsweise auch aus einem kostengünstigen Kunststoff bestehen.

Bevorzugt wird die Erfindung für den Antrieb von Fensterhebern in Kraftfahrzeugen eingesetzt, wobei die identische elektrische Antriebseinheit 10 sowohl auf der linken Fahrzeugseite, als auch auf der rechten Fahrzeugseite einsetzbar ist und auch für den Antrieb von Fensterscheiben in Heckklappen oder von unmittelbar in der Karosserie vorgesehenen versenkbaren Scheiben einsetzbar ist, wie dies beispielsweise bei Cabriolets der Fall ist.

## Patentansprüche

1. Elektrische Antriebseinheit mit einer Gehäuseschale (12), einem eine Ankerwelle (18) und einen Anker aufweisenden elektrischen Antriebsmotor (14) und einem diesem nachgeordneten Getriebe (16), das mit dem Antriebsmotor (14) über die Ankerwelle (18) wirkverbunden ist, wobei der Antriebsmotor (14) und das Getriebe (16) von der Gehäuseschale (12) aufgenommen sind, wobei der Antriebsmotor (14) ein geteiltes magnetisches Rückschlusselement aufweist, wobei ein Teil (42) des Rückschlusselements zur Fixierung des Antriebsmotors (14) an der Gehäuseschale (12) mit dieser verbindbar ist und wobei das Teil (42) des Rückschlusselements zumindest einen Niederhalteabschnitt (52; 54) aufweist, der die Ankerwelle (18) zur drehbaren Lagerung in der Gehäuseschale (12) haltert,
**dadurch gekennzeichnet,**
**dass** das Teil (42) ein oberes, von der Gehäuseschale (12) wegragendes Teil (42) des Rückschlusselements ist, dass das obere Teil (42) des Rückschlusselements zwei Niederhalteabschnitte (52; 54) aufweist, die die Ankerwelle (18) zur drehbaren Lagerung in der Gehäuseschale (12) an zwei unterschiedlichen Orten haltern, und dass ein Gehäusedeckel (56) vorgesehen ist, der zum Verschließen der Gehäuseschale (12) mit dieser verbindbar, vorzugsweise verrastbar ist.

2. Elektrischer Antriebseinheit nach Anspruch 1,
**dadurch gekennzeichnet,**
**dass** der mindestens eine Niederhalteabschnitt (52; 54) als axialer Fortsatz des oberen Teils (42) ausgebildet ist.

3. Elektrische Antriebseinheit nach einem der vorhergehenden Ansprüche,
**dadurch gekennzeichnet,**
**dass** der mindestens eine Niederhalteabschnitt (52; 54) aus einem Stück mit dem axialen oberen Teil (42) ausgebildet ist, insbesondere als metallisches Stanzblech.

4. Elektrische Antriebseinheit nach einem der vorhergehenden Ansprüche,
**dadurch gekennzeichnet,**
**dass** der mindestens eine axiale Fortsatz näherungsweise rechtwinklig umgeformt ist und mit einer Endseite radial gegen mindestens ein Lager (28, 30, 32) der Ankerwelle (18) gepresst wird.

5. Elektrische Antriebseinheit nach einem der vorhergehenden Ansprüche,
**dadurch gekennzeichnet,**
**dass** das obere Teil (42) zusammen mit den angeformten axialen Fortsätzen auf der Ankerwelle (18) angeordnete elektrische Wicklungen mit einem damit verbundenen Kommutator in axialer Richtung vollständig überdeckt.

6. Elektrische Antriebseinheit nach einem der vorhergehenden Ansprüche,
**dadurch gekennzeichnet,**
**dass** die Antriebseinheit (10) einen Antrieb eines Fensterhebers in einem Kraftfahrzeug bildet und dass der Gehäusedeckel von einem Bereich (72) der Fahrzeugkarosserie oder einen Karosserieeinsatzes gebildet ist.

7. Elektrische Antriebseinheit nach Anspruch 6,
**dadurch gekennzeichnet,**
**dass** der Karosserieeinsatz von einem Moduleinsatz (64) für eine Fahrzeugtür oder Fahrzeugklasse gebildet ist.

## Claims

1. Electrical drive unit having a housing shell (12), having an electric drive motor (14) which has an armature shaft (18) and an armature, and having a gear mechanism (16) which is arranged downstream of the said electric drive motor and is operatively connected to the drive motor (14) by means of the armature shaft (18), wherein the drive motor (14) and the gear mechanism (16) are accommodated by the housing shell (12), wherein the drive motor (14) has a divided magnetic return path element, wherein a part (42) of the return path element, in order to fix the drive motor (14) to the housing shell (12), can be connected to the said housing shell, and wherein the part (42) of the return path element has at least one holding-down section (52; 54) which holds the armature shaft (18) in the housing shell (12) such that it is mounted in a rotatable manner,
**characterized**
**in that** the part (42) is an upper part (42) of the return path element, which part projects away from the housing shell (12), in that the upper part (42) of the return path element has two holding-down sections (52; 54) which hold the armature shaft (18) at two different locations in the housing shell (12) such that it is mounted in a rotatable manner, and in that a housing cover (56) is provided, it being possible, in order to close the housing shell (12), to connect, preferably latch, the said housing cover to the said housing shell.

2. Electrical drive unit according to Claim 1,
**characterized**
**in that** the at least one holding-down section (52; 54) is in the form of an axial projection of the upper part (42).

3. Electrical drive unit according to either of the preceding claims,
**characterized**
**in that** the at least one holding-down section (52; 54) is formed integrally with the axial upper part (42), in particular in the form of a stamped metal sheet.

4. Electrical drive unit according to one of the preceding claims,
**characterized**
**in that** the at least one axial projection is shaped approximately into a right angle and is pressed, by way of an end face, radially against at least one bearing (28, 30, 32) of the armature shaft (18).

5. Electrical drive unit according to one of the preceding claims,
**characterized**
**in that** the upper part (42), together with the integrally formed axial projections, completely covers electrical windings, which are arranged on the armature shaft (18) and have a commutator which is associated with them, in the axial direction.

6. Electrical drive unit according to one of the preceding claims,
**characterized**
**in that** the drive unit (10) forms a drive of a window winder in a motor vehicle, and in that the housing cover is formed by a region (72) of the vehicle body or a body insert.

7. Electrical drive unit according to Claim 6,
**characterized**
**in that** the body insert is formed by a module insert (64) for a vehicle door or vehicle hatch.

## Revendications

1. Unité d'entraînement électrique comprenant une coque de boîtier (12), un moteur d'entraînement électrique (14) comportant un arbre d'induit (18) et un induit, et une transmission (16) placée en aval de ce moteur d'entraînement, laquelle transmission est reliée fonctionnellement au moteur d'entraînement (14) par le biais de l'arbre d'induit (18), le moteur d'entraînement (14) et la transmission (16) étant reçus par la coque de boîtier (12), le moteur d'entraînement (14) comprenant un élément de blindage magnétique divisé, une partie (42) de l'élément de blindage pouvant, en vue de la fixation du moteur d'entraînement (14) à la coque de boîtier (12), être reliée à celle-ci, la partie (42) de l'élément de blindage comprenant au moins une portion de retenue (52 ; 54), laquelle retient l'arbre d'induit (18) pour le montage à rotation dans la coque de boîtier (12),
**caractérisée**
**en ce que** la partie (42) est une partie (42) supérieure, faisant saillie à l'écart de la coque de boîtier (12), de l'élément de blindage, en ce que la partie supérieure (42) de l'élément de blindage comprend deux portions de retenue (52 ; 54), lesquelles retiennent l'arbre d'induit (18) en deux emplacements différents pour le montage à rotation dans la coque de boîtier (12), et en ce qu'il est prévu un couvercle de boîtier (56) qui, en vue de la fermeture de la coque de boîtier (12), peut être relié à celle-ci, de préférence encliqueté avec celle-ci.

2. Unité d'entraînement électrique selon la revendication 1,
**caractérisée**
**en ce que** l'au moins une portion de retenue (52 ; 54) est réalisée en tant que prolongement axial de la partie supérieure (42).

3. Unité d'entraînement électrique selon l'une quelconque des revendications précédentes,
**caractérisée**
**en ce que** l'au moins une portion de retenue (52 ; 54) est réalisée d'une seule pièce avec la partie supérieure axiale (42), en particulier en tant que tôle à estamper métallique.

4. Unité d'entraînement électrique selon l'une quelconque des revendications précédentes,
**caractérisée**
**en ce que** l'au moins un prolongement axial est formé approximativement à angle droit et est pressé, par un côté d'extrémité, radialement contre au moins un palier (28, 30, 32) de l'arbre d'induit (18).

5. Unité d'entraînement électrique selon l'une quelconque des revendications précédentes,
**caractérisée**
**en ce que** la partie supérieure (42), conjointement avec les prolongements axiaux formés, recouvre complètement dans la direction axiale des enroulements électriques disposés sur l'arbre d'induit (18) avec un collecteur relié à ceux-ci.

6. Unité d'entraînement électrique selon l'une quelconque des revendications précédentes,
**caractérisée**
**en ce que** l'unité d'entraînement (10) forme un entraînement d'un lève-vitre dans un véhicule automobile, et en ce que le couvercle de boîtier est formé par une région (72) de la carrosserie de véhicule ou d'un insert de carrosserie.

7. Unité d'entraînement électrique selon la revendication 6,
**caractérisée**
**en ce que** l'insert de carrosserie est formé par un insert modulaire (64) pour une porte de véhicule ou un hayon de véhicule.
